# EUROPEAN PATENT SPECIFICATION

(11) **EP 3 406 397 B1**
(45) Date of publication and mention of the grant of the patent: **13.12.2023**
(21) Application number: 16886591.3
(22) Date of filing: 18.05.2016
(51) Int. Cl.: B23Q 1/70, B23Q 5/04, B23Q 5/10, B23Q 5/54, B23B 31/02, B23B 31/26, B23B 31/28

(54) **ELECTRIC DRIVEN CHUCKING SYSTEM COMPRISING AUTOMATIC CLUTCH SYSTEM**
ELEKTRISCH ANGETRIEBENES AUFSPANNSYSTEM MIT AUTOMATISCHEM KUPPLUNGSSYSTEM
SYSTÈME DE MANDRINAGE À ENTRAÎNEMENT ÉLECTRIQUE COMPRENANT UN SYSTÈME D'EMBRAYAGE AUTOMATIQUE

(30) Priority: 19.01.2016 KR 20160006509; 25.04.2016 KR 20160050311
(43) Date of publication of application: 28.11.2018
(73) Proprietor: Khan Workholding Co., Ltd., Changwon-si, Gyeongsangnam-do 51338 (KR)
(72) Inventor: CHANG, Junghwan, Busan 47732 (KR); YUN, Yongseon, Changwon-si Gyeongsangnam-do 51643 (KR)
(74) Representative: Keilitz, Wolfgang
(86) International application number: PCT/KR2016/005272
(87) International publication number: WO 2017/126748

(56) References cited:
- EP-A2- 1 114 685
- EP-B1- 1 345 722
- WO-A1-02/43906
- KR-A- 20140 093 906
- KR-A- 20150 117 419
- US-A- 2 471 863
- US-A- 4 573 379

## Description

### [Technical Field]

The present invention relates to a machine tool, and more particularly, to an electrically driven chucking system which enables, in a lathe for machining a workpiece, the power of a motor driving a spindle to be selectively transmitted to a drawbar which drives a chuck and spindle by using a clutch mechanism.

### [Background Art]

In general, a machine tool includes a target workpiece and a cutting tool, and when one among the target workpiece and the cutting tool is stationary, the other is rotated to thereby shape the target workpiece. A machine tool is classified into a lathe and a milling machine depending on the rotating part.

The lathe is configured such that a target workpiece rotates with a cutting tool in a stationary state, and typically includes a chuck for holding the target workpiece, a drawbar for driving the chuck, and a spindle for rotating the drawbar, the chuck, and the target workpiece.

The conventional lathes require an independent driving system for driving each of a drawbar and a spindle, and to this end, haves employed a hydraulic system for a drawbar and an electric system for a spindle. The conventional drawbar operating on hydraulic pressure is complicated to install, cannot control a gripping force of a chuck when holding a target workpiece, and has low efficiency. In order to resolve such constraints, there have been continuing efforts to replace hydraulic systems with electric systems (U.S. Registered Patent No.: US 4,573,379 and the like).

However, since each of the drawbar and the spindle still requires an independent electrically driven system despite the above-described efforts, the overall structure of the lathe is complicated. In addition, since there is a need to install individual motors, which are the driving source of an electric system, the size and cost of the lathe are increased.

Document WO 02/43906 A discloses an electrically driven chucking system comprising an automatic clutch system, comprising: a housing; a spindle which is rotatable with respect to the housing; a driving member which is rotatable relative to the spindle; a spindle motor; a clutch member which is linearly movable in an axial direction with respect to the spindle; a clutch drive unit configured to actuate the clutch member; a drawbar which is formed inside the spindle; an encoder configured to measure an amount of rotation of the spindle; and an encoder rotation device connected to the clutch member and the encoder to transmit a rotational force of the clutch member to the encoder when the clutch member rotates together with the spindle. Another chucking system is disclosed in US 2 471 863 A.

### [Technical Problem]

The present invention is directed to providing an electrically driven chucking system enabling lathe work to be performed using a single electric driving unit by selectively transmitting the power of a motor to a drawbar which drives a chuck and spindle by using a clutch mechanism.

### [Technical Solution]

One aspect of the present invention provides an electrically driven chucking system including an automatic clutch system, including: a housing fixedly installed on a main body of a machine tool; a spindle having a hollow tube shape and provided inside the housing to be rotatable with respect to the housing; a driving member disposed outside a rear portion of the spindle to be rotatable relative to the spindle; a spindle motor configured to rotate the driving member; a clutch member which is installed on an outer surface of the spindle to be linearly movable in an axial direction with respect to the spindle between the driving member and one end portion of the housing and which is coupled to the driving member or the housing depending on a direction of movement thereof to selectively connect the spindle to the driving member or the housing; a clutch drive unit configured to actuate the clutch member; and a drawbar which is formed inside the spindle to permit linear movement thereof in the axial direction with respect to the spindle but preclude rotational movement thereof relative to the spindle, such that the drawbar linearly moves in the axial direction or moves together with the spindle depending on spindle restriction conditions set by the clutch member.

Another aspect of the present invention provides an electrically driven chucking system including an automatic clutch system, including: a housing fixedly installed on a main body of a machine tool; a spindle having a hollow tube shape and provided inside the housing to be rotatable with respect to the housing; a driving member rotatably disposed outside the rear portion of the spindle; a motor configured to rotate the driving member; a driving shaft installed inside the spindle to be rotatable with respect to the spindle and having a rear end portion fixed to the driving member to rotate together with the driving member, with a first screw thread formed on a front end portion of the driving shaft in a spiral shape; a spline key fixed to a front portion of the spindle and having a spline groove formed in an axial direction of the spindle; a movement conversion shaft having at a rear portion provided with a second screw thread spirally coupled to the first screw thread and having a front portion provided with a spline uneven portion coupled to the spline groove of the spline key to move in the axial direction along the spline groove; a drawbar fixedly installed on the movement conversion shaft; a clutch coupler which is installed on an outer surface of the spindle to be linearly movable in an axial direction with respect to the spindle and which is coupled to the driving member or the housing depending on a direction of movement thereof to selectively connect the spindle to one among the driving member and the housing; and a clutch drive unit configured to actuate the clutch coupler.

Another aspect of the present invention provides an electrically driven chucking system including an automatic clutch system, including: a housing fixedly installed on a main body of a machine tool; a spindle having a hollow tube shape and provided inside the housing to be rotatable with respect to the housing; a driving member disposed outside a rear portion of the spindle to be rotatable relative to the spindle; a spindle motor configured to rotate the driving member; a clutch member which is installed on an outer surface of the spindle to be linearly movable in an axial direction with respect to the spindle between the driving member and one end portion of the housing and which is coupled to the driving member or the housing depending on a direction of movement thereof to selectively connect the spindle to one among the driving member and the housing; a clutch drive unit configured to actuate the clutch member; a drawbar which is formed inside the spindle to permit linear a movement thereof in an axial direction with respect to the spindle but preclude rotational movement thereof relative to the spindle, such that the drawbar linearly moves in the axial direction with respect to the spindle or move together with the spindle depending on spindle restriction conditions set by the clutch member; an encoder configured to measure an amount of rotation of the spindle; and an encoder rotation device connected to the clutch member and the encoder to transmit a rotational force of the clutch member to the encoder when the clutch member rotates together with the spindle.

### [Advantageous Effects]

According to embodiments of the present invention, a target workpiece can be machined by selectively generating axial movement of a drawbar and rotational movement of a spindle using a single motor, so that the structure of a driving device can be simplified and the overall size of the device can be reduced.

In addition, according to the electrically driven chucking system according to the present invention, relative velocity between a drawbar and a spindle is not generated, such that the drawbar is, due to centrifugal force during rotation of the spindle, prevented from moving forward, thereby preventing a clamping force from being weakened. In other words, the electrically driven chucking system according to the present invention is in a structurally locked state such that a drawbar connected to a jaw is connected in a spline structure to a spindle, and a male screw thread of a movement conversion adaptor is spirally coupled to a female screw thread of a female screw cover such that the drawbar and the spindle are rotated at the same speed, preventing the drawbar from being pushed forward by a centrifugal force. Since the drawbar is structurally locked, a stable clamping force is provided and the jaw is not opened, even at a high rotation speed.

### [Description of Drawings]

FIG. 1 is a side view illustrating an electrically driven chucking system according to a first embodiment of the present invention.
FIG. 2 is a cut-away perspective view illustrating the electrically driven chucking system shown in FIG. 1.
FIGS. 3 and 4 are cross sectional views illustrating the electrically driven chucking system shown in FIG. 1, in which FIG. 3 shows a clutch-on state and FIG. 4 shows a clutch-off state.
FIG. 5 is a cut-away perspective view illustrating main parts cut away from the electrically driven chucking system shown in FIG. 1.
FIG. 6 is a cut-away perspective view illustrating an electrically driven chucking system according to a second embodiment of the present invention.
FIG. 7 and 8 are cross sectional views illustrating the electrically driven chucking system shown in FIG. 6, in which FIG. 7 shows a clutch-on state and FIG. 8 shows a clutch-off state.
FIG. 9 is a cut-away perspective view illustrating main parts cut away from the electrically driven chucking system shown in FIG. 6.
FIG. 10 is a cross sectional view illustrating an electrically driven chucking system according to a third embodiment of the present invention.
FIG. 11 is an exploded perspective view illustrating disassembled main parts of the electrically driven chucking system shown in FIG. 10.
FIG. 12 is a perspective view illustrating a clutch member of the electrically driven chucking system shown in FIG. 10.
FIGS. 13 and 14 are enlarged views illustrating main parts (a clutch member, a clutch drive unit, an encoder rotation device, and the like) of the electrically driven chucking system shown in FIG. 10, in which FIG. 13 shows a clutch-on state and FIG. 14 shows a clutch-off state.
FIG. 15 is a cross sectional view illustrating main parts of an electrically driven chucking system according to a fourth embodiment of the present invention.
FIG. 16 is an exploded perspective view illustrating the electrically driven chucking system shown in FIG. 15.

### [Modes of the Invention]

Hereinafter, an electrically driven chucking system including an automatic clutch system according to exemplarily embodiments of the present invention will be described in detail with reference to the accompanying drawings.

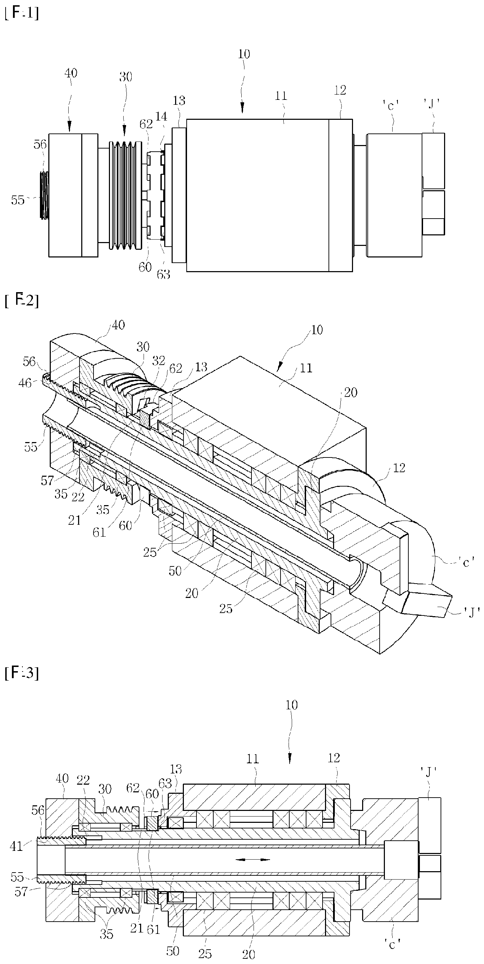

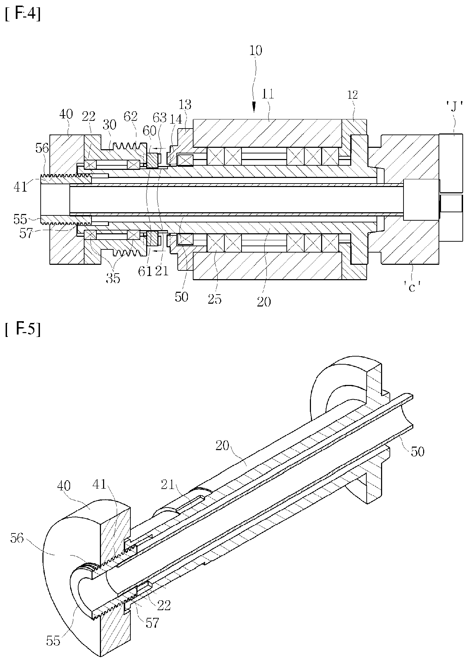

Referring to FIGS. 1 and 5, an electrically driven chucking system according to a first embodiment of the present invention includes a housing 10, a spindle 20 provided inside the housing 10 and having a hollow tube shape to be rotatable with respect to the housing 10, a driving member 30 disposed outside a rear portion of the spindle 20 to be rotatable relative to the spindle 20, a spindle motor (not shown) for rotating the driving member 30, a female screw cover 40 having one side fixed to the driving member 30, a movement conversion adaptor 55 formed in a cylindrical tube shape and spirally coupled to a central portion of the female screw cover 40, a drawbar 50 fixedly coupled to the movement conversion adaptor 55 and installed inside the spindle 20 to linearly move in an axial direction with respect to the spindle 20, a clutch member which is installed on an outer surface of the spindle 20 to be linearly movable in the axial direction with respect to the spindle 20 between the driving member 30 and one end portion of the housing 10 and which is coupled to the driving member 30 or the housing 10 depending on a direction of movement thereof to selectively connect the spindle 20 to one among the driving member 30 and the housing 10, and a clutch drive unit configured to actuate the clutch member.

According to the first embodiment, the clutch member is provided as a clutch coupler 60 having a ring shape and installed on the outer surface of the spindle 20 to be movable in the axial direction with respect to the spindle 20.

The housing 10 has a hollow cylindrical shape and is fixedly installed on a main body of a machine tool. According to the first embodiment, the housing 10 includes a housing body 11 formed in a barrel shape and having an open front side and rear side, a front side cover 12 formed in a disk shape, coupled to the front side of the housing body 11, and having a central portion which is provided with an opening through which a front portion of the spindle 20 passes, and a rear side cover 13 formed in a disk shape, coupled to the rear side of the housing body 11, and having a central portion which is provided with an opening through which a rear portion of the spindle 20 passes and an outer surface which is provided with a second locking uneven portion 14 for connection with the clutch coupler 60.

A chuck C for machining a target workpiece is provided outside a front portion of the front side cover 12 of the housing 10, and a jaw J for gripping the target workpiece is installed on the chuck C to be radially movable. The jaw J is connected to a front end portion of the drawbar 50 through a connection member (not shown) to, through linear forward and backward movement, grip or release a target workpiece while radially moving.

The spindle 20 has an elongated cylindrical tube shape and is rotatably installed in an inner space of the housing 10. A plurality of spindle bearings 25 are installed between an outer surface of the spindle 20 and an inner surface of the housing 10 to rotatably support the spindle 20 against the housing 10.

Spline key grooves 21 are arranged in an outer circumferential surface of a rear portion of the spindle 20 while being spaced a predetermined interval from each other in the circumferential direction to permit axial movement of the clutch coupler 60 and preclude relative rotation of the clutch coupler 60. In addition, a plurality of spline grooves 22 are formed in an inner circumferential surface of the rear portion of the spindle 20 while extending in the axial direction to permit axial movement of the movement conversion adaptor 55 and preclude relative rotation of the movement conversion adaptor 55. The spline grooves 22 are arranged in the inner circumferential surface of the rear portion of the spindle 20 while being spaced a predetermined interval from each other in the circumferential direction.

The driving member 30 is installed at the rear end portion of the spindle 20 to be rotatable along an outer surface of the spindle 20. The driving member 30 is rotated by receiving power from the spindle motor through a power transmission member (not shown) such as a belt (not shown) or a gear. A pulley bearing 35 for rotatably supporting the driving member 30 against the spindle 20 is installed between an inner surface of the driving member 30 and an outer surface of the spindle 20.

The driving member 30 has a front side provided with a first locking uneven portion 32 having a gear tooth shape for connection with the clutch coupler 60.

The female screw cover 40 has a disk shape and a central portion provided with a hole through which the movement conversion adaptor 55 passes to be coupled to the female screw cover 40, and has a front side fixedly coupled to the driving member 30 to rotate together with the driving member 30. The hole formed in the central portion of the female screw cover 40 has an inner circumferential surface provided with a female screw thread 41 formed in a spiral shape.

The movement conversion adaptor 55 has a cylindrical tube shape and has an outer circumferential surface provided with the male screw thread 56 spirally coupled to the female screw thread 41, and the movement conversion adaptor 55 is coupled to the central portion of the female screw cover 40 to be linearly movable. The movement conversion adaptor 55 has an outer circumferential surface having a front portion which is provided with a spline uneven portion 57 that slides along the spline groove 22 formed in the inner circumferential surface of the spindle 20, thus permitting axial movement thereof with respect to the spindle 20 while precluding rotational movement thereof relative to the spindle 20. Accordingly, when the female screw cover 40 is rotated due to rotation of the driving member 30, interaction between the female screw thread 41 and the male screw thread 56 allows the movement conversion adaptor 55 to be linearly moved with respect to the female screw cover 40 and the spindle 20.

The drawbar 50 is a component that linearly moves in the axial direction with respect to the spindle 20 or rotates together the spindle 20 depending on spindle restriction conditions set by the clutch member. A rear end portion of the drawbar 50 is inserted and fixed to a front end portion of the movement conversion adaptor 55 to linearly move forward and backward together with the movement conversion adaptor 55 inside the spindle 20. The drawbar 50 and the movement conversion adaptor 55 are separately manufactured and are coupled to each other for use, but alternatively, the drawbar 50 and the movement conversion adaptor 55 may be integrally formed.

The clutch coupler 60 is a clutch member which is installed to slide in the axial direction with respect to the spindle 20 between the front portion of the driving member 30 and the rear portion of the housing 10 and which is coupled to the driving member 30 or the housing 10 depending on the direction of movement thereof to selectively connect the spindle 20 to one among the driving member 30 and the housing 10.

The clutch coupler 60 according to the first embodiment has a ring shape in a central portion thereof provided with a circular hole through which the spindle 20 to passes. The clutch coupler 60 is provided at an inner circumferential surface of the central portion with a clutch uneven portion 61 having a gear tooth shape and engaged with the spline key groove 21 formed on the outer circumferential surface of the spindle 20 so as to be movable only in the axial direction. In addition, the clutch coupler 60 has a rear portion provided with a first coupling uneven portion 62 having a gear tooth shape and engaged with the first locking uneven portion 32 of the driving member 30, and has a front portion with a second coupling uneven portion 63 having a gear tooth shape and engaged with the second locking uneven portion 14 of the housing 10.

Although not shown in the drawings, the clutch drive unit (not shown) for operating the clutch coupler 60 may be provided using generally known linear movement devices such as a solenoid type drive unit which, upon application of external power, applies an axial force to the clutch coupler 60 to move the clutch coupler 60 in the axial direction, a pneumatic cylinder or a hydraulic cylinder operating according to application of pneumatic or hydraulic pressure, or a linear motor generating linear motion using an electric force.

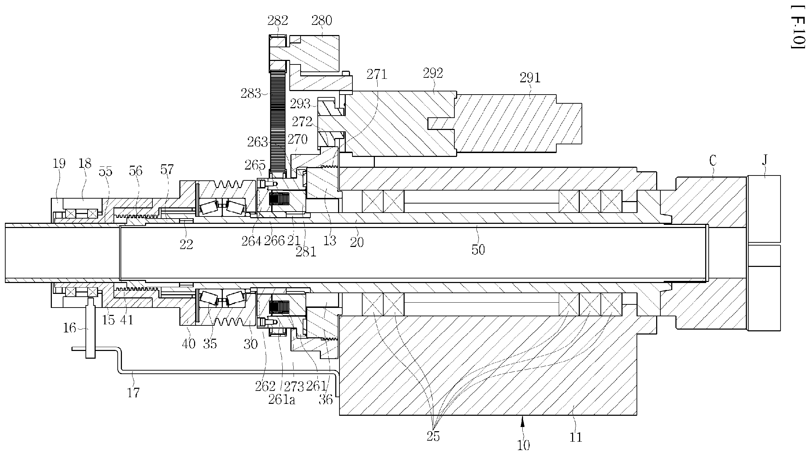

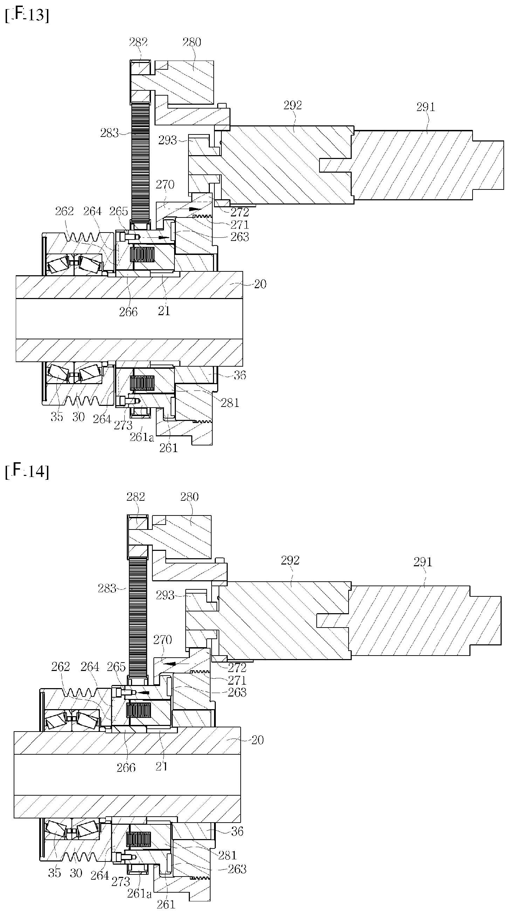

In addition to the above described method of operating the clutch coupler in which a force is applied to the clutch coupler 60 in either direction using the clutch drive unit (not shown) to move the clutch coupler 60 forward and backward, an elastic body (not shown) for applying an elastic force to the clutch coupler 60 in one direction may be additionally installed such that the clutch drive unit (not shown) applies a force to the clutch coupler 60 in one direction to move the clutch coupler 60 forward or backward, and when the external force of the clutch drive unit is removed, the clutch coupler 60 may be linearly moved in the other direction by the elastic force of the elastic body. An example of the above will be described with reference to a third embodiment, which is illustrated in FIGS. 10 and 14below.

Hereinafter, a method of driving the electrically driven chucking system according to the first embodiment is described with reference to FIGS. 3 and 4 in detail.

First, referring to FIG. 3, when a clutch-on state is entered with power or pneumatic pressure applied to the clutch drive unit (not shown), the clutch coupler 60 is moved forward with respect to the spindle 20 (rightward in the drawing), causing the second coupling uneven portion 63 formed on the front side of the clutch coupler 60 to be engaged with the second locking uneven portion 14 of the rear side of the rear side cover 13. As a result, the spindle 20 is connected to the housing 10 and thus a rotation thereof is restricted.

When the spindle motor (not shown) is actuated in the above state, the driving member 30 is rotated by receiving power from the spindle motor, and the female screw cover 40 rotates together with the driving member 30. Since the male screw thread 56 of the movement conversion adaptor 55 is spirally coupled to the female screw cover 40, and the movement conversion adaptor 55 is restrained by interaction of the spline uneven portion 57 and the spline groove 22 so as not to be rotated with respect to the spindle 20, the movement conversion adaptor 55 and the drawbar 50 fixed to the movement conversion adaptor 55 are caused to move backward in the axial direction (a leftward linear movement in the drawing).

As the drawbar 50 moves backward with respect to the spindle 20, the jaw J provided on the chuck C is closed to firmly hold the target workpiece. When the machining of the target workpiece is completed, the driving member 30 is rotated in the opposite direction by the spindle motor to move the movement conversion adaptor 55 and the drawbar 50 forward in the axial direction, allowing the jaw J to release the gripped target workpiece.

In the state in which the jaw J firmly grips the target workpiece during backward movement of the drawbar 50 as described above, when power or pneumatic pressure is applied to the clutch drive unit (not shown) to enter a clutch-off state, the clutch coupler 60 is moved backward with respect to the spindle 20 (leftward in the drawing) as shown in FIG. 4, causing the first coupling uneven portion 62 formed on the rear side of the clutch coupler 60 to be engaged with the first locking uneven portion 32 of the front side of the driving member 30. As a result, the spindle 20 is connected to the driving member 30 through the clutch coupler 60 and rotation thereof is permitted.

In the above state, when the power of the spindle motor is transmitted to the driving member 30 and thus the driving member 30 is rotated, the drawbar 50 is rotated together with the spindle 20 at a high speed so that the target workpiece is machined

According to the present invention, the axial movement of the drawbar 50 and the rotational movement of the spindle 20 are selectively generated using a single spindle motor to machine a target workpiece so that the structure of the driving device is simplified and the overall size of the device is reduced.

In addition, according to the electrically driven chucking system according to the present invention, relative velocity between the drawbar 50 and the spindle 20 is not generated, so that the drawbar 50 is prevented from moving forward by a centrifugal force during rotation of the spindle 20, thereby preventing the clamping force from being weakened. In other words, a centrifugal force arising from the chuck when the spindle 20 and the drawbar 50 machines a target workpiece while rotating at a high speed causes the jaw J of the chuck to be opened, thereby reducing the clamping force. However, the electrically driven chucking system according to the present invention is in a structurally locked state such that the drawbar 50 connected to the jaw J is connected to the spindle 20 in a spline structure, and the male screw thread 56 of the movement conversion adaptor 55 is spirally coupled to the female screw thread 41 of the female screw cover 40, and thus the drawbar 50 and the spindle 20 rotate at the same speed, preventing the drawbar 50 from being pushed rightward (forward) by a centrifugal force. Since the drawbar 50 is structurally locked, the jaw may not be opened even at a high rotation speed and may provide a stable clamping force.

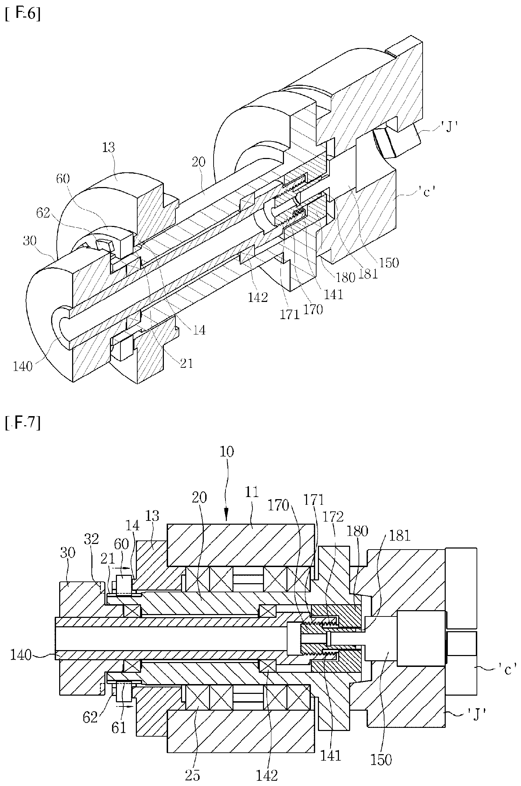

Referring to FIGS. 6 to 9, an electrically driven chucking system according to a second embodiment of the present invention includes a housing 10, a spindle 20 having a hollow tube shape and provided inside the housing 10 to be rotatable with respect to the housing 10, a driving member 30 disposed outside a rear portion of the spindle 20 to be rotatable relative to the spindle 20, a driving shaft 140 installed inside the spindle 20 to be rotatable with respect to the spindle 20, a spline key 180 fixed to a front portion of the spindle 20 and having a spline groove 181 formed in an axial direction of the spindle, a movement conversion shaft 170 having a front portion provided with a spline uneven portion 172 coupled to the spline groove 181 of the spline key 180 to move in the axial direction along the spline groove 181, a drawbar 150 fixedly installed in a central portion of the movement conversion shaft 170, a clutch coupler 60 which is a clutch member installed on an outer surface of the spindle 20 to be linearly movable in the axial direction with respect to the spindle 20, and a clutch drive unit configured to reciprocate the clutch coupler 60 in the axial direction of the spindle 20.

Similar to the above described embodiment, the housing 10 includes a housing body 11 which has a shape of a barrel with an open front side and rear side and is coupled to a main body of a machine tool, and a rear side cover 13 formed in a disk shape, coupled to the rear side of the housing body 11 and having a central portion which is provided with an opening through which a rear portion of the spindle 20 passes and a rear side which is provided with a second locking uneven portion 14 for coupling with the clutch coupler 60.

The spindle 20 has an elongated cylindrical tube shape and is rotatably installed in an inner space of the housing 10. A plurality of spindle bearings 25 are installed between an outer surface of the spindle 20 and an inner surface of the housing 10 to rotatably support the spindle 20 against the housing 10.

Spline key grooves 21 in the form of gear teeth are arranged in an outer circumferential surface of a rear portion of the spindle 20 to permit axial movement of the clutch coupler 60 and preclude relative rotation of the clutch coupler 60.

The driving member 30 is rotatably installed outside the rear end portion of the spindle 20. The driving member 30 is rotated by the receiving power from a spindle motor through a power transmission member (not shown) such as a belt or a gear. A central portion of the driving member 30 is fixedly coupled to a rear end portion of the driving shaft 140, and when the driving member 30 rotates, rotates together with the driving member 30.

The driving member 30 is has a front side provided with a first locking uneven portion 32 having a gear tooth shape for connection with the clutch coupler 60.

The driving shaft 140 has an elongated cylindrical tube shape and has a rear end portion fixed to the central portion of the driving member 30. The driving shaft 140 is installed inside the spindle 20 to be rotatable with respect to the spindle 20. A plurality of shaft bearings 142 rotatably supporting the driving shaft 140 against the spindle 20 are installed between an outer surface of the driving shaft 140 and an inner surface of the spindle 20.

The driving shaft 140 has an inner circumferential surface having a front end portion which is provided with a first screw thread 141, which is a female screw thread, in a spiral shape.

The movement conversion shaft 170 is inserted into an inside of the front end portion of the driving shaft 140 to be linearly moved in the axial direction with respect to the driving shaft 140, and has an outer circumferential surface having a rear portion which is provided with a second screw thread 171, which is a male screw thread, spirally coupled to the first screw thread 141 and a front portion which is provided with a spline uneven portion 172 coupled to the spline groove 181 of the spline key 180 so as to be moved in the axial direction along the spline groove 181. Accordingly, when the driving shaft 140 rotates, the movement conversion shaft 170 is caused to move forward and backward in the axial direction by interaction between the first screw thread 141 and the second screw thread 171 and between the spline groove 181 and the spline uneven portion 172.

The drawbar 150 is coupled to the central portion of the movement conversion shaft 170 at a front of the movement conversion shaft 170. Similar to the drawbar 150 described above according to the first embodiment, the drawbar 150 according to the second embodiment is also connected to a jaw J of a chuck C through a connection member (not shown) such that when the drawbar 150 moves backward, the jaw J is moved in a radially inward direction to grip a target workpiece, and when the drawbar 150 moves forward, the jaw J is moved in a radially outward direction to release the target workpiece.

The spline key 180 provided as a cylindrical body is fixedly installed inside the front end portion of the spindle 20 and has a central portion having a hole having an inner circumferential surface which is provided with the spline groove 181 connected to the spline uneven portion 172 of the movement conversion shaft 170 such that the movement conversion shaft 170 is connected to the spline key 180 to permit linear movement thereof while precluding rotation thereof with respect to the spline key 180.

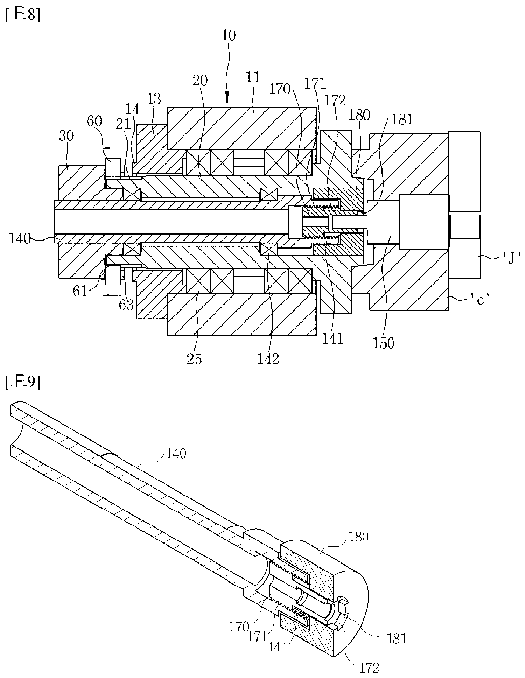

A method of driving the electrically driven chucking system according to the second embodiment will be described with reference to FIGS. 7 and 8 in detail.

First, referring to FIG. 7, when a clutch-on state is entered with power or pneumatic pressure applied to the clutch drive unit (not shown), the clutch coupler 60 is moved forward with respect to the spindle 20 (rightward in the drawing), causing the second coupling uneven portion 63 formed on the front side of the clutch coupler 60 to be engaged with the second locking uneven portion 14 of the rear side of the rear side cover 13. As a result, the spindle 20 is connected to the housing 10 and rotation thereof is restricted.

When the spindle motor (not shown) is actuated in the above state, the driving member 30 is rotated by receiving power from the spindle motor, and the driving shaft 140 rotates together with the driving member 30. Since the first screw thread 141 of the driving shaft 140 is spirally coupled to the second screw thread 171 of the movement conversion shaft 170 and the movement conversion shaft 170 is restrained by the spline key 180 so as not to be rotated, the movement conversion shaft 170 and the drawbar 150 fixed to the movement conversion shaft 170 are caused to move backward in the axial direction (a leftward linear movement in the drawing).

As the drawbar 150 moves backward with respect to the spindle 20, the Jaw J is closed to firmly hold the target workpiece.

In the state in which the jaw J firmly grips the target workpiece during the backward movement of the drawbar 150 as described above, when power or pneumatic pressure is applied to the clutch drive unit (not shown) to enter a clutch-off state, the clutch coupler 60 is moved backward with respect to the spindle 20 (leftward in the drawing) as shown in FIG. 8, causing the first coupling uneven portion 62 formed on the rear side of the clutch coupler 60 to be engaged with the first locking uneven portion 32 of the front side of the driving member 30. As a result, the spindle 20 is connected to the driving member 30 through the clutch coupler 60 and rotation thereof is permitted.

In the above state, when the power of the spindle motor is transmitted to the driving member 30 and thus the driving member 30 is rotated, the driving shaft 140, the movement conversion shaft 170, and the drawbar 150 are rotated together with the spindle 20 at a high speed, so that the target workpiece is machined.

In the second embodiment as well, a clutch drive unit (not shown) for operating the clutch coupler 60 may be provided using generally known linear movement devices such as a solenoid type drive unit which, upon application of external power, applies an axial force to the clutch coupler 60 to move the clutch coupler 60 in the axial direction, a pneumatic cylinder or a hydraulic cylinder operating according to application of pneumatic or hydraulic pressure, or a linear motor generating linear motion using an electric force.

FIGS. 10 and 14 illustrate an electrically driven chucking system according to the third embodiment of the present invention.

Referring to FIGS. 10 to 14, similar to the first embodiment described above, the electrically driven chucking system according to the third embodiment of the present invention includes a housing, a spindle 20, a driving member 30, a female screw cover 40, a movement conversion adapter 55, and a drawbar 50, but in contrast to the first embodiment, further includes an encoder 280 to measure the amount of rotation of the spindle and an encoder rotation device, and is different with regard to the structure of a clutch member serving to connect the spindle 20 to one among the driving member 30 and the housing 10 and of a clutch drive unit configured to actuate the clutch member .

The encoder rotation device according to the third embodiment is connected to the clutch member and the encoder 280 to transmit a rotational force of the clutch member to the encoder 280 when the clutch member rotates together with the spindle 20. According to the third embodiment, the encoder rotation device includes a spindle encoder pulley 281 coupled to the clutch member and rotating together with the clutch member, an encoder pulley 282 connected to a shaft of the encoder 280, and a belt 283 wound around an outer surface of the spindle encoder pulley 281 and an outer surface of the encoder pulley 282 to transmit a rotational force of the spindle encoder pulley 281 to the encoder pulley 282.

The clutch member includes a clamping clutch 261 installed inside a carrier 270 in front of the spindle encoder pulley 281 to be rotatable and moveable in the axial direction such that when the carrier 270 constituting the clutch drive unit moves forward, a front side of the clamping clutch 261 comes into close contact with a rear end portion of the housing 10, and a spindle rotating clutch 262 connected to the clamping clutch 261 behind (left side in the drawing) the spindle encoder pulley 281 such that when the carrier 270 moves backward, a rear side of the spindle rotating clutch 262 comes into close contact with a front side of the driving member 30.

The clutch drive unit includes a clutch drive motor 291 fixed to the housing 10, a decelerator 292 for decelerating and transmitting the power of the clutch drive motor 291, a pinion gear 293 coupled to an output shaft of the decelerator 292 to be rotated, and the carrier 270 rotating using the power of the clutch drive motor 291 received from the pinion gear 293 to reciprocate in the axial direction of the spindle 20 by a predetermined distance so as to move the clamping clutch 261 in the axial direction of the spindle 20.

The carrier 270 has a ring shape, has an outer circumferential surface provided with a driven gear portion 272 formed in a circumferential direction to receive a rotational force while engaged with the pinion gear 293, and has an inner circumferential surface provided with a screw thread 271 spirally coupled to a screw thread 13a of a rear side cover 13 fixed to the rear end portion of the housing 10.

Accordingly, when the clutch drive motor 291, upon application of power to the clutch drive motor 291, is moved clockwise or counterclockwise, a rotational force of the clutch drive motor 291 is transmitted to the pinion gear 293 with great torque through the decelerator 292 to rotate the pinion gear 293, and thus when the carrier 270 is rotated with respect to the rear side cover 13, interaction of the screw thread 13a of the rear side cover 13 and the screw thread 271 of the carrier 270 causes the carrier 270 to rotate while linearly moving forward and backward.

The clamping clutch 261 and the spindle rotating clutch 262 constituting the clutch member are disposed, respectively, in front of and behind the spindle encoder pulley 281, between the front portion of the driving member 30 and the rear portion of the housing 10 so as to be slidable with respect to the spindle 20, thus serving to selectively connect the spindle 20 to one among the driving member 30 and the housing 10 when the spindle rotating clutch 262 is coupled to the front side of the driving member 30 or the clamping clutch 261 is coupled to the rear side of the rear side cover 13 at the rear end portion of the housing 10.

According to the third embodiment, the clamping clutch 261 has a ring shape, a central portion provided with a circular hole through which the spindle 20 passes, and a structure in which a plurality of coupling protrusions 261a coupled to the spindle rotating clutch 262 through a plurality of through-holes 281a formed through the spindle encoder pulley 281 protrude backward. The coupling protrusions 261a have a curved plate shape and are arranged in the circumferential direction at a predetermined interval. The coupling protrusion 261a is coupled to the spindle rotating clutch 262 by a fastening device such as a screw.

A plurality of first friction pads 263 are installed at a front side of the clamping clutch 261 to provide a frictional force by coming into close contact with the rear side of the rear side cover 13.

The spindle rotating clutch 262 has a ring shape and a central portion which is provided with an opening through which the spindle 20 passes. A plurality of second friction pads 264 are installed at a rear side of the spindle rotating clutch 262 to provide a frictional force by coming into close contact with the front side of the driving member 30. Since an inner circumferential surface of the opening of the spindle rotating clutch 262 is coupled, together with the spindle encoder pulley 281, to a spline key 266 connected to the spline key groove 21 of the spindle 20, the spindle rotating clutch 262 moves in the axial direction with respect to the spindle 20 together with the clamping clutch 261.

Between the spindle rotating clutch 262 and the spindle encoder pulley 281, a compression spring 273 for applying, against the spindle encoder pulley 281, a backward elastic force to the spindle rotating clutch 262 is installed. The compression spring 273 is installed inside a plurality of spring insertion holes 281b formed through the spindle encoder pulley 281.

The clamping clutch 261 and the spindle rotating clutch 262 are caused to move in the axial direction of the spindle 20 by the carrier 270 and the compression spring 273 installed between the spindle rotating clutch 262 and the spindle encoder pulley 281. In detail, when the carrier 270 rotates and moves forward by receiving power from the clutch drive motor 291, the clamping clutch 261 is pulled forward such that the front side thereof comes into close contact with the rear side of the rear side cover 13, and when the carrier 270 moves backward, the spindle rotating clutch 262 is pressed backward to come into close contact with the front side of the driving member 30.

The encoder 280 is a component for detecting a position of the spindle 20 by measuring an amount of rotation of the spindle 20, and the encoder pulley 282 connected to the shaft of the encoder 280 is connected to the spindle encoder pulley 281 through the belt 283 so as to mechanically receive a rotational force of the spindle 20 to thereby accurately detect the amount of rotation of the spindle 20. According to the third embodiment, the encoder 280 is installed at one side of the clutch drive unit.

The spindle encoder pulley 281 is installed between the clamping clutch 261 and the spindle rotating clutch 262, and has an inner circumferential surface coupled to the spline key 266 to which the spindle rotating clutch 262 is coupled so that the spindle encoder pulley 281 rotates together with the spindle rotating clutch 262. The spindle encoder pulley 281 has a ring shape in which the plurality of through-holes 281a shaped to correspond to the coupling protrusions 261a of the clamping clutch 261 and allowing the coupling protrusions 261a to pass therethrough are arranged at a predetermined interval in the circumferential direction, and the plurality of spring insertion holes 281b into which the compression springs 273 are insertedly installed are formed. The spindle encoder pulley 281 has a front side adjacently supported by a rear side of a bearing locknut 36 installed on the rear portion of the housing 10. The bearing locknut 36 is used to apply a preload to the spindle bearing 25, and the spindle 20, the spindle bearing 25, and the bearing locknut 36 rotate together with each other during rotation of the spindle 20. The spindle 20 and the bearing locknut 36 are coupled to each other by a fastening member such as a screw.

The reference number 15 in FIG. 10 not described indicates a rotary shaft coupled to the rear side of the female screw cover 40, and reference numbers 18 and 19 not described indicate a rotary housing and a rotary housing cover fixed to the housing 10 by a fixing pin 16 and a rotation preventing bracket 17, respectively.

Hereinafter, a method of driving the electrically driven chucking system according to the third embodiment will be described in detail.

First, referring to FIG. 13, when a clutch-on state is entered with power applied to the clutch drive motor 291 of the clutch drive unit, the carrier 270 is moved forward by a predetermined distance while rotating with respect to the rear side cover 13. Accordingly, the clamping clutch 261 and the spindle rotating clutch 262 coupled to the clamping clutch 261 are moved forward by a predetermined distance, causing the front side of the clamping clutch 261 to come into close contact with the rear side of the rear side cover 13, so that the spindle 20 is connected to the housing 10 and rotation of the spindle 20 is restricted. At this time, the rear side of the spindle rotating clutch 262 is spaced a predetermined distance from the driving member 30.

In the above state, when a spindle motor (not shown) operates, the driving member 30 is rotated by receiving power from the motor, and the female screw cover 40 is rotated together with the driving member 30. At this time, the male screw thread 56 of the movement conversion adaptor 55 is spirally coupled to the female screw cover 40 and the movement conversion adaptor 55 is restrained so as not to be rotated with respect to the spindle 20, due to interaction of the spline uneven portion 57 and the spline groove 22. The movement conversion adaptor 55 and the drawbar 50 fixed to the movement conversion adaptor 55 are moved backward in the axial direction (leftward in the drawing).

As the drawbar 50 moves backward with respect to the spindle 20, the jaw J provided on the chuck C is closed to firmly hold the target workpiece. When the machining of the target workpiece is completed, the driving member 30 is rotated in the opposite direction by the spindle motor (not shown) to move the movement conversion adaptor 55 and the drawbar 50 forward in the axial direction, causing the jaw J to release the gripped target workpiece.

In the state in which the jaw J firmly grips the target workpiece during the backward movement of the drawbar 50 as described above, when the power is applied to the clutch drive motor 291 to enter a clutch-off state, the carrier 270 is moved backward by a predetermined distance while rotating with respect to the rear side cover 13 as shown in FIG. 14. Accordingly, the force for moving the clamping clutch 261 forward is removed. At this time, the spindle rotating clutch 262 is subject to a strong elastic force in the backward direction by the compression spring 273 installed inside the spindle encoder pulley 281, which causes the spindle rotating clutch 262 and the clamping clutch 261 to move backward by a predetermined distance, so that the clamping clutch 261 is separated from the rear side cover 13 and, at the same time, the rear side of the spindle rotating clutch 262 forcefully comes into close contact with the front side of the driving member 30.

In the above state, when the power of the spindle motor (not shown) is transmitted to the driving member 30 and the driving member 30 is rotated at a high speed, the spindle rotating clutch 262 and the clamping clutch 261 are rotated at a high speed, and the spindle 20 coupled to the spindle rotating clutch 262 is rotated together with the drawbar 50 at a high speed so that the target workpiece is machined. At this time, the spindle encoder pulley 281 is rotated together with the spindle rotating clutch 262, and thus the encoder pulley 282 is made to rotate, so that an amount of rotation of the spindle 20 is measured by the encoder 280 in real time.

According to the present invention as such, a target workpiece is machined by selectively generating axial movement of the drawbar 50 and rotational movement of the spindle 20 using a single motor, so that the construction of a driving device can be simplified and the overall size of the device can be reduced.

In addition, according to the electrically driven chucking system of the present invention, relative velocity between the drawbar 50 and the spindle 20 is not generated, so that the drawbar 50 is, due to centrifugal force during rotation of the spindle 20, prevented from moving forward, thereby preventing a clamping force from being weakened. In other words, although centrifugal force arising from the chuck when the spindle 20 and the drawbar 50 machine a target workpiece while rotating at a high speed may cause the jaw J of the chuck to be opened so as to reduce the clamping force, the electrically driven chucking system according to the present invention is in a structurally locked state such that the drawbar 50 connected to the jaw J is connected to the spindle 20 in a spline structure and the male screw thread 56 of the movement conversion adaptor 55 is spirally coupled to the female screw thread 41 of the female screw cover 40, such that the drawbar 50 and the spindle 20 are rotated at the same speed, preventing the drawbar 50 from being pushed rightward in the drawing (forward) by the centrifugal force. Since the drawbar 50 is structurally locked, the jaw J may not be opened even at a high rotation speed and may provide a stable clamping force.

The above described embodiment is such that the clamping clutch 261 comes into close contact with the rear side cover 13 and the spindle rotating clutch 262 comes into close contact with the driving member 30, each making surface contact and causing power to be transmitted due to frictional force. However, a uneven portion in the form of gear teeth may be provided on the front side of the clamping clutch 261 and the rear side of the rear side cover 13 such that the clamping clutch 261 and the rear side cover 13 are engaged with each other in a uneven portion structure for connecting with each other to thereby transmit power.

In addition, the above described embodiment is such that the movement conversion adaptor 55 having the male screw thread 56 is provided on the rear end of the drawbar 50 for linear movement of the drawbar 50, and the female screw thread 41 spirally coupled to the male screw thread 56 is provided on the female screw cover 40 such that the movement conversion adaptor 55 and the drawbar 50 linearly move with respect to the spindle 20. However, alternatively, the linear movement of the drawbar 50 with respect to the spindle 20 may be implemented using a ball screw or a roller screw in order to increase a thrust of the drawbar 50 by minimizing friction resistance.

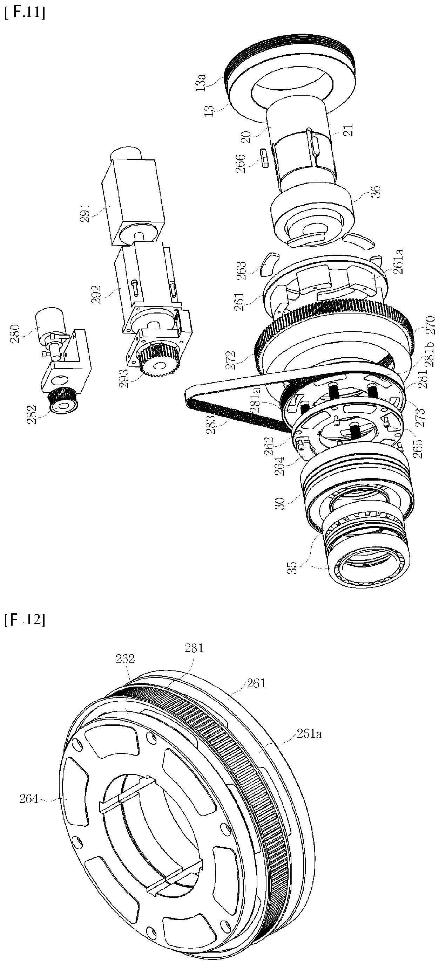

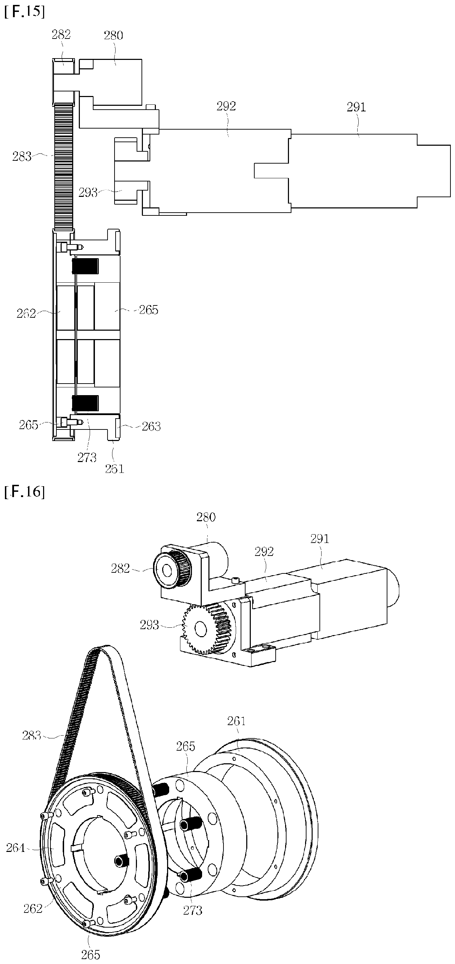

FIGS. 15 and 16 illustrate an embodiment modified from the above described embodiments. An electrically driven chucking system according to the embodiment is different from the first embodiment with regard to the structure of the clutch member and the encoder rotation device. In detail, a clutch member according to the embodiment includes a clamping clutch 261 installed inside the carrier 270 (see FIGS. 10 and 11) to be rotatable and axially movable such that when the carrier 270 moves forward, a front side of the clamping clutch 261 comes into close contact with a rear end portion of the housing 10, a spindle rotating clutch 262 coupled to a front of the clamping clutch 261 to come into close contact with a front side of the driving member 30 by moving together with the clamping clutch 261, a spring housing 265 disposed inside the clamping clutch 261 and adjacently supported by a rear end portion of a bearing locknut 36 (see FIGS. 10 and 11), a front end portion of which is disposed at a rear portion of the housing 10, and a compression spring 273 applying, against the spring housing 265, an elastic force in a backward direction to the spindle rotating clutch 262.

The encoder rotation device for transmitting a rotational force of the spindle 20 to the encoder 280 includes an encoder pulley 282 connected to a shaft of the encoder 280 and a belt 283 wound around an outer surface of the spindle rotating clutch 262 and an outer surface of the encoder pulley 282 to transmit a rotational force of the spindle rotating clutch 262 to the encoder pulley 282.

In other words, the electrically driven chucking system according to the embodiment has a structure in which the belt 283 connected to the encoder 280 is directly connected to the outer surface of the spindle rotating clutch 262, without having an additional spindle encoder pulley 281 (see FIG. 11).

The present invention is applicable to the machine tool industry, which encompasses a lathe for machining a workpiece.

## Claims

1. An electrically driven chucking system comprising an automatic clutch system, comprising:
a housing (10) fixedly installed on a main body of a machine tool;
a spindle (20) having a hollow tube shape and provided inside the housing (10) to be rotatable with respect to the housing (10);
a driving member (30) disposed outside a rear portion of the spindle (20) to be rotatable relative to the spindle (20);
a spindle motor configured to rotate the driving member (30);
a clutch member which is installed on an outer surface of the spindle (20) to be linearly movable in an axial direction with respect to the spindle 20 between the driving member (30) and one end portion of the housing (10) and which is coupled to the driving member (30) or the housing (10) depending on a direction of movement thereof to selectively connect the spindle (20) to one among the driving member (30) and the housing (10);
a clutch drive unit configured to actuate the clutch member;
a drawbar which is formed inside the spindle (20) to permit linear movement thereof in an axial direction with respect to the spindle but preclude rotational movement thereof relative to the spindle, such that the drawbar linearly moves in the axial direction with respect to the spindle or moves together with the spindle depending on the spindle restriction conditions set by the clutch member;
an encoder (280) configured to measure an amount of rotation of the spindle; and
an encoder rotation device connected to the clutch member and the encoder (280) to transmit a rotational force of the clutch member to the encoder when the clutch member rotates together with the spindle (20),
**characterized in that** the encoder rotation device comprises a spindle encoder pulley (281) coupled to the clutch member and rotating together with the clutch member, an encoder pulley (282) connected to a shaft of the encoder (280), and a belt (283) wound around an outer surface of the spindle encoder pulley (281) and an outer surface of the encoder pulley (282) to transmit a rotational force of the spindle encoder pulley (281) to the encoder pulley (282)
and **in that** the clutch member comprises:
a clamping clutch (261) installed in front of the spindle encoder pulley (281) to be rotatable about the axial direction of the spindle and axially movable such that the clamping clutch (261) linearly moves forward to come into close contact with a rear end portion of the housing (10) when the clutch drive unit moves forward; and
a spindle rotating clutch (262) connected to the clamping clutch (261) behind the spindle encoder pulley (281) to move backward together with the clamping clutch (261) and come into close contact with a front side of the driving member (30) when the clamping clutch (261) is moved backward by the clutch drive unit.

2. The electrically driven chucking system of claim 1, wherein the clutch drive unit comprises:
a clutch drive motor (281) fixed to the housing (10);
a pinion gear (293) rotated by receiving power from the clutch drive motor (281); and
a carrier (270) which has an outer circumferential surface provided with a driven gear portion (272) formed in a circumferential direction to receive a rotational force while engaged with the pinion gear (293) and has an inner circumferential surface provided with a screw thread (271) spirally coupled to a screw thread formed on the rear end portion of the housing (10), such that the carrier (270) rotates using power of the clutch drive motor (291) received from the pinion gear (293) and reciprocates in the axial direction of the spindle (20) by a predetermined distance to move the clamping clutch (261) in the axial direction of the spindle (20).

3. The electrically driven chucking system of claim 1, wherein a first friction pad (263) for providing a frictional force while coming into close contact with the rear end portion of the housing (10) is installed on a front side of the clamping clutch (261), and a second friction pad (264) for providing a frictional force while coming into close contact with the front side of the driving member (30) is installed on a rear side of the spindle rotating clutch (262).

4. The electrically driven chucking system of claim 1, wherein the spindle encoder pulley (281) has a plurality of through-holes (281a), and the clamping clutch (261) has a plurality of coupling protrusions (261a) coupled to the spindle rotating clutch (262) by passing through the through-holes (281a).

5. The electrically driven chucking system of claim 1, wherein the spindle encoder pulley (281) has a front side adjacently supported by a rear side of a bearing locknut (36) installed on a rear portion of the housing (10), a plurality of spring insertion holes (281b) is provided in the spindle encoder pulley (281), and a compression spring (273) for applying an elastic force in a backward direction to the spindle rotating clutch (262) is installed inside the spring insertion holes (281b) such that when the clutch drive unit moves backward, the spindle rotating clutch (262) is moved backward by the compression spring (273) to come into close contact with the front side of the driving member (30).

6. The electrically driven chucking system of claim 1, wherein the spindle rotating clutch (262), while coupled to a spline key (266) sliding along a spline key groove (21) formed in the axial direction on an outer circumferential surface of the spindle (30), slides in the axial direction of the spindle (20).

7. The electrically driven chucking system of claim 1, wherein the clutch member comprises:
a clamping clutch (261) installed inside the clutch drive unit to permit rotational movement and axial movement, such that a front side of the clamping clutch (261) comes into close contact with a rear end of the housing (10) as the clutch drive unit moves forward;
a spindle rotating clutch (262) coupled to a front side of the clamping clutch (261) to come into close contact with a front side of the driving member (30) while moving together with the clamping clutch (261);
a spring housing (265) disposed inside the clamping clutch (261) and having a front end portion adjacently installed at a rear end portion of a bearing locknut (36) installed on a rear portion of the housing (10); and
a compression spring (273) configured to apply an elastic force in a backward direction to the spindle rotating clutch (262) with respect to the spring housing (10),
wherein the encoder rotation device comprises an encoder pulley (282) connected to a shaft of the encoder (280) and a belt (283) wound around an outer surface of the spindle rotating clutch (262) and an outer surface of the encoder pulley (282) to transmit a rotational force of the spindle rotating clutch (262) to the encoder pulley (282).

8. The electrically driven chucking system of claim 1, further comprising a female screw cover (40) formed in a cylindrical shape, having one side fixed to the driving member (30), and having a central portion which is provided with a female screw thread (41), wherein a movement conversion adaptor (55) formed in a cylindrical tube shape and coupled to the rear end portion of the drawbar (50) has a rear portion of an outer circumferential surface provided with a male screw thread (56) spirally coupled to the female screw thread (41) and a front portion of the outer circumferential surface provided with a spline uneven portion (57) sliding along a spline groove (22) formed in the axial direction in an inner circumferential surface of the spindle (20).

## Patentansprüche

1. Elektrisch angetriebenes Spannsystem mit einem automatischen Kupplungssystem, umfassend:
ein Gehäuse (10), das fest an einem Hauptkörper einer Werkzeugmaschine installiert ist;
eine Spindel (20), die die Form eines hohlen Rohres hat und innerhalb des Gehäuses (10) vorgesehen ist, um in Bezug auf das Gehäuse (10) drehbar zu sein;
ein Antriebselement (30), das außerhalb eines hinteren Abschnitts der Spindel (20) angeordnet ist, um relativ zu der Spindel (20) drehbar zu sein;
einen Spindelmotor, der zum Drehen des Antriebselements (30) konfiguriert ist
ein Kupplungselement, das an einer Außenfläche der Spindel (20) installiert ist, um in einer axialen Richtung in Bezug auf die Spindel (20) zwischen dem Antriebselement (30) und einem Endabschnitt des Gehäuses (10) linear beweglich zu sein, und das mit dem Antriebselement (30) oder dem Gehäuse (10) in Abhängigkeit von dessen Bewegungsrichtung gekoppelt ist, um die Spindel (20) wahlweise mit dem Antriebselement (30) oder dem Gehäuse (10) zu verbinden;
eine Kupplungsantriebseinheit, die zum Betätigen des Kupplungselements konfiguriert ist;
eine Zugstange, die innerhalb der Spindel (20) ausgebildet ist, um eine lineare Bewegung derselben in einer axialen Richtung in Bezug auf die Spindel zu ermöglichen, aber eine Drehbewegung derselben relativ zu der Spindel auszuschließen, so dass sich die Zugstange linear in der axialen Richtung in Bezug auf die Spindel bewegt oder sich zusammen mit der Spindel bewegt, abhängig von den Spindelbeschränkungsbedingungen, die durch das Kupplungselement eingestellt werden;
einen Kodierer (280), der so konfiguriert ist, dass er einen Betrag der Drehung der Spindel misst; und
eine Kodierer-Drehvorrichtung, die mit dem Kupplungselement und dem Kodierer (280) verbunden ist, um eine Drehkraft des Kupplungselements auf den Kodierer zu übertragen, wenn sich das Kupplungselement zusammen mit der Spindel (20) dreht,
**dadurch gekennzeichnet, dass** die Kodierer-Drehvorrichtung eine Spindel-Kodierer-Riemenscheibe (281), die mit dem Kupplungselement gekoppelt ist und sich zusammen mit dem Kupplungselement dreht, eine Kodierer-Riemenscheibe (282), die mit einer Welle des Kodierers (280) verbunden ist, und einen Riemen (283) umfasst, der um eine Außenfläche der Spindel-Kodierer-Riemenscheibe (281) und eine Außenfläche der Kodierer-Riemenscheibe (282) gewickelt ist, um eine Drehkraft der Spindel-Kodierer-Riemenscheibe (281) auf die Kodierer-Riemenscheibe (282) zu übertragen
und dass das Kupplungselement umfasst:
eine Klemmkupplung (261), die vor der Spindel-Encoderriemenscheibe (281) installiert ist, um um die axiale Richtung der Spindel drehbar und axial beweglich zu sein, so dass sich die Klemmkupplung (261) linear nach vorne bewegt, um in engen Kontakt mit einem hinteren Endabschnitt des Gehäuses (10) zu kommen, wenn sich die Kupplungsantriebseinheit nach vorne bewegt; und
eine Spindeldrehkupplung (262), die mit der Klemmkupplung (261) hinter der Spindel-Encoder-Riemenscheibe (281) verbunden ist, um sich zusammen mit der Klemmkupplung (261) rückwärts zu bewegen und in engen Kontakt mit einer Vorderseite des Antriebselements (30) zu kommen, wenn die Klemmkupplung (261) durch die Kupplungsantriebseinheit rückwärts bewegt wird.

2. Elektrisch angetriebenes Spannsystem nach Anspruch 1, wobei die Kupplungsantriebseinheit umfasst:
einen Kupplungsantriebsmotor (281), der an dem Gehäuse (10) befestigt ist;
ein Ritzel (293), das durch die Aufnahme von Energie von dem Kupplungsantriebsmotor (281) gedreht wird; und
einen Träger (270), der eine äußere Umfangsfläche aufweist, die mit einem angetriebenen Zahnradabschnitt (272) versehen ist, der in einer Umfangsrichtung ausgebildet ist, um eine Drehkraft aufzunehmen, während er mit dem Ritzel (293) in Eingriff steht, und der eine innere Umfangsfläche aufweist, die mit einem Schraubgewinde (271) versehen ist, das spiralförmig mit einem Schraubgewinde gekoppelt ist, das an dem hinteren Endabschnitt des Gehäuses (10) ausgebildet ist, so dass sich der Träger (270) unter Verwendung der Kraft des Kupplungsantriebsmotors (291), die von dem Ritzel (293) empfangen wird, dreht und sich in der axialen Richtung der Spindel (20) um eine vorbestimmte Strecke hin- und herbewegt, um die Spannkupplung (261) in der axialen Richtung der Spindel (20) zu bewegen.

3. Elektrisch angetriebenes Spannsystem nach Anspruch 1, wobei ein erster Reibbelag (263) zum Bereitstellen einer Reibungskraft, während er in engen Kontakt mit dem hinteren Endabschnitt des Gehäuses (10) kommt, an einer Vorderseite der Spannkupplung (261) installiert ist, und ein zweiter Reibbelag (264) zum Bereitstellen einer Reibungskraft, während er in engen Kontakt mit der Vorderseite des Antriebselements (30) kommt, an einer Rückseite der Spindeldrehkupplung (262) installiert ist.

4. Elektrisch angetriebenes Spannsystem nach Anspruch 1, wobei die Spindel-Encoder-Riemenscheibe (281) eine Vielzahl von Durchgangslöchern (281a) aufweist und die Spannkupplung (261) eine Vielzahl von Kupplungsvorsprüngen (261a) aufweist, die durch die Durchgangslöcher (281a) hindurch mit der Spindeldrehkupplung (262) verbunden sind.

5. Elektrisch angetriebenes Spannsystem nach Anspruch 1, wobei die Spindel-Encoder-Riemenscheibe (281) eine Vorderseite aufweist, die benachbart von einer Rückseite einer Lagerkontermutter (36) getragen wird, die an einem hinteren Abschnitt des Gehäuses (10) installiert ist, wobei eine Vielzahl von Federeinsetzlöchern (281b) in der Spindel-Encoder-Riemenscheibe (281) vorgesehen ist, und eine Druckfeder (273) zum Aufbringen einer elastischen Kraft in einer Rückwärtsrichtung auf die Spindeldrehkupplung (262) innerhalb der Federeinsetzlöcher (281b) installiert ist, so dass, wenn sich die Kupplungsantriebseinheit rückwärts bewegt, die Spindeldrehkupplung (262) durch die Druckfeder (273) rückwärts bewegt wird, um in engen Kontakt mit der Vorderseite des Antriebselements (30) zu kommen.

6. Elektrisch angetriebenes Spannsystem nach Anspruch 1, wobei die Spindeldrehkupplung (262), während sie mit einer Keilnut (266) gekoppelt ist, die entlang einer Keilnut (21) gleitet, die in der axialen Richtung auf einer äußeren Umfangsfläche der Spindel (30) ausgebildet ist, in der axialen Richtung der Spindel (20) gleitet.

7. Elektrisch angetriebenes Spannsystem nach Anspruch 1, wobei das Kupplungselement umfasst:
eine Klemmkupplung (261), die innerhalb der Kupplungsantriebseinheit installiert ist, um eine Drehbewegung und eine axiale Bewegung zu ermöglichen, so dass eine Vorderseite der Klemmkupplung (261) in engen Kontakt mit einem hinteren Ende des Gehäuses (10) kommt, wenn sich die Kupplungsantriebseinheit vorwärts bewegt;
eine Spindeldrehkupplung (262), die mit einer Vorderseite der Klemmkupplung (261) gekoppelt ist, um in engen Kontakt mit einer Vorderseite des Antriebselements (30) zu kommen, während sie sich zusammen mit der Klemmkupplung (261) bewegt;
ein Federgehäuse (265), das innerhalb der Klemmkupplung (261) angeordnet ist und einen vorderen Endabschnitt aufweist, der benachbart an einem hinteren Endabschnitt einer Lagerkontermutter (36) installiert ist, die an einem hinteren Abschnitt des Gehäuses (10) installiert ist; und
eine Druckfeder (273), die so konfiguriert ist, dass sie eine elastische Kraft in einer Rückwärtsrichtung auf die Spindeldrehkupplung (262) in Bezug auf das Federgehäuse (10) ausübt,
wobei die Kodierer-Drehvorrichtung eine Kodierer-Riemenscheibe (282), die mit einer Welle des Kodierers (280) verbunden ist, und einen Riemen (283) umfasst, der um eine Außenfläche der Spindel-Drehkupplung (262) und eine Außenfläche der Kodierer-Riemenscheibe (282) gewickelt ist, um eine Drehkraft der Spindel-Drehkupplung (262) auf die Kodierer-Riemenscheibe (282) zu übertragen.

8. Elektrisch angetriebenes Spannsystem nach Anspruch 1, ferner mit einer zylindrisch geformten Innengewindeabdeckung (40), deren eine Seite an dem Antriebselement (30) befestigt ist und die einen mittleren Abschnitt aufweist, der mit einem Innengewinde (41) versehen ist, wobei ein Bewegungsumwandlungsadapter (55), der in einer zylindrischen Rohrform ausgebildet und mit dem hinteren Endabschnitt der Zugstange (50) gekoppelt ist, einen hinteren Abschnitt einer Außenumfangsfläche aufweist, der mit einem Außengewinde (56) versehen ist, das spiralförmig mit dem Innengewinde (41) gekoppelt ist, und einen vorderen Abschnitt der Außenumfangsfläche aufweist, der mit einem unebenen Keilnutabschnitt (57) versehen ist, der entlang einer Keilnut (22) gleitet, die in der axialen Richtung in einer Innenumfangsfläche der Spindel (20) ausgebildet ist.

## Revendications

1. Un système de serrage à entraînement électrique comprenant un système d'embrayage automatique, comprenant:
un boîtier (10) installé de manière fixe sur le corps principal d'une machine-outil;
une broche (20) ayant la forme d'un tube creux et placée à l'intérieur du boîtier (10) pour être rotative par rapport au boîtier (10) ;
un élément d'entraînement (30) disposé à l'extérieur d'une partie arrière de la broche (20) pour être rotatif par rapport à la broche (20) ;
un moteur de broche configuré pour faire tourner l'élément d'entraînement (30),
un élément d'embrayage installé sur une surface extérieure de la broche (20) pour être déplacé linéairement dans une direction axiale par rapport à la broche (20) entre l'élément d'entraînement (30) et une partie d'extrémité du boîtier (10) et qui est couplé à l'élément d'entraînement (30) ou au boîtier (10) en fonction de la direction de son mouvement pour connecter sélectivement la broche (20) à l'un des éléments d'entraînement (30) et au boîtier (10);
une unité d'entraînement de l'embrayage configurée pour actionner l'élément d'embrayage;
une barre de traction formée à l'intérieur de la broche (20) pour permettre son mouvement linéaire dans une direction axiale par rapport à la broche mais empêcher son mouvement de rotation par rapport à la broche, de sorte que la barre de traction se déplace linéairement dans la direction axiale par rapport à la broche ou se déplace avec la broche en fonction des conditions de restriction de la broche définies par l'élément d'embrayage;
un codeur (280) configuré pour mesurer une quantité de rotation de la broche; et
un dispositif de rotation du codeur connecté à l'élément d'embrayage et au codeur (280) pour transmettre une force de rotation de l'élément d'embrayage au codeur lorsque l'élément d'embrayage tourne avec la broche (20),
**caractérisé en ce que** le dispositif de rotation du codeur comprend une poulie de codeur de broche (281) couplée à l'élément d'embrayage et tournant avec l'élément d'embrayage, une poulie de codeur (282) connectée à un arbre du codeur (280), et une courroie (283) enroulée autour d'une surface extérieure de la poulie de codeur de broche (281) et d'une surface extérieure de la poulie de codeur (282) pour transmettre une force de rotation de la poulie de codeur de broche (281) à la poulie de codeur (282)
et **en ce que** l'élément d'embrayage comprend
un embrayage de serrage (261) installé devant la poulie codeuse de broche (281) pour être rotatif autour de la direction axiale de la broche et axialement mobile de sorte que l'embrayage de serrage (261) se déplace linéairement vers l'avant pour entrer en contact étroit avec une partie de l'extrémité arrière du boîtier (10) lorsque l'unité d'entraînement de l'embrayage se déplace vers l'avant; et
un embrayage rotatif de broche (262) relié à l'embrayage de serrage (261) derrière la poulie codeuse de broche (281) pour se déplacer vers l'arrière avec l'embrayage de serrage (261) et venir en contact étroit avec un côté avant de l'élément d'entraînement (30) lorsque l'embrayage de serrage (261) est déplacé vers l'arrière par l'unité d'entraînement de l'embrayage.

2. Le système de serrage à entraînement électrique de la revendication 1, dans lequel l'unité d'entraînement de l'embrayage comprend:
un moteur d'embrayage (281) fixé au boîtier (10);
un pignon (293) qui tourne sous l'effet de l'énergie fournie par le moteur d'entraînement de l'embrayage (281); et
un support (270) dont la surface circonférentielle extérieure est pourvue d'une partie d'engrenage entraîné (272) formée dans une direction circonférentielle pour recevoir une force de rotation lorsqu'il est engagé avec le pignon (293) et dont la surface circonférentielle intérieure est pourvue d'un filetage (271) couplé en spirale à un filetage formé sur la partie d'extrémité arrière du boîtier (10), de sorte que le support (270) tourne en utilisant la puissance du moteur d'entraînement de l'embrayage (291) reçue de l'engrenage à pignon (293) et effectue un mouvement de va-et-vient dans la direction axiale de la broche (20) sur une distance prédéterminée pour déplacer l'embrayage de serrage (261) dans la direction axiale de la broche (20).

3. Le système de serrage à entraînement électrique de la revendication 1, dans lequel un premier patin de frottement (263) destiné à fournir une force de frottement lors d'un contact étroit avec la partie arrière du boîtier (10) est installé sur un côté avant de l'embrayage de serrage (261), et un second patin de frottement (264) destiné à fournir une force de frottement lors d'un contact étroit avec le côté avant de l'élément d'entraînement (30) est installé sur un côté arrière de l'embrayage de rotation de la broche (262).

4. Le système de serrage à entraînement électrique de la revendication 1, dans lequel la poulie codeuse de la broche (281) comporte une pluralité de trous de passage (281a), et l'embrayage de serrage (261) comporte une pluralité de saillies de couplage (261a) couplées à l'embrayage rotatif de la broche (262) en passant à travers les trous de passage (281a).

5. Le système de serrage à entraînement électrique de la revendication 1, dans lequel la poulie codeuse de broche (281) a un côté avant adjacent à un côté arrière d'un contre-écrou de roulement (36) installé sur une partie arrière du boîtier (10), une pluralité de trous d'insertion de ressort (281b) est prévue dans la poulie codeuse de broche (281), et un ressort de compression (273) destiné à appliquer une force élastique vers l'arrière à l'embrayage rotatif de la broche (262) est installé à l'intérieur des trous d'insertion de ressort (281b) de sorte que lorsque l'unité d'entraînement de l'embrayage se déplace vers l'arrière, l'embrayage rotatif de la broche (262) est déplacé vers l'arrière par le ressort de compression (273) pour entrer en contact étroit avec le côté avant de l'élément d'entraînement (30).

6. Le système de serrage à entraînement électrique de la revendication 1, dans lequel l'embrayage rotatif de la broche (262), tout en étant couplé à une clavette (266) glissant le long d'une rainure de clavette (21) formée dans la direction axiale sur une surface circonférentielle extérieure de la broche (30), glisse dans la direction axiale de la broche (20).

7. Le système de serrage à entraînement électrique de la revendication 1, dans lequel l'élément d'embrayage comprend:
un embrayage de serrage (261) installé à l'intérieur de l'unité d'entraînement de l'embrayage pour permettre un mouvement de rotation et un mouvement axial, de sorte qu'un côté avant de l'embrayage de serrage (261) entre en contact étroit avec une extrémité arrière du boîtier (10) lorsque l'unité d'entraînement de l'embrayage se déplace vers l'avant;
un embrayage rotatif de broche (262) couplé à un côté avant de l'embrayage de fermeture (261) pour venir en contact étroit avec un côté avant de l'élément d'entraînement (30) tout en se déplaçant avec l'embrayage de fermeture (261);
un boîtier de ressort (265) disposé à l'intérieur de l'embrayage de serrage (261) et ayant une partie d'extrémité avant installée de manière adjacente à une partie d'extrémité arrière d'un contre-écrou de roulement (36) installé sur une partie arrière du boîtier (10); et
un ressort de compression (273) configuré pour appliquer une force élastique dans le sens inverse à l'embrayage rotatif de la broche (262) par rapport au boîtier du ressort (10),
dans lequel le dispositif de rotation du codeur comprend une poulie de codeur (282) reliée à un arbre du codeur (280) et une courroie (283) enroulée autour d'une surface extérieure de l'embrayage rotatif de la broche (262) et d'une surface extérieure de la poulie du codeur (282) pour transmettre une force de rotation de l'embrayage rotatif de la broche (262) à la poulie du codeur (282).

8. Le système de serrage à entraînement électrique de la revendication 1, comprenant en outre un couvercle à vis femelle (40) de forme cylindrique, dont un côté est fixé à l'élément d'entraînement (30) et dont la partie centrale est pourvue d'un filetage à vis femelle (41), dans lequel un adaptateur de conversion de mouvement (55) de forme cylindrique et couplé à l'extrémité arrière de la barre de traction (50) a une partie arrière d'une surface circonférentielle extérieure pourvue d'un filetage mâle (56) couplé en spirale au filetage femelle (41) et une partie avant de la surface circonférentielle extérieure pourvue d'une partie inégale cannelée (57) glissant le long d'une rainure cannelée (22) formée dans la direction axiale dans une surface circonférentielle intérieure de la broche (20).
